# FASCICULE DE BREVET EUROPEEN

(11) **EP 1 678 400 B1**
(45) Date de publication et mention de la délivrance du brevet: **22.08.2007**
(21) Numéro de dépôt: 04787334.4
(22) Date de dépôt: 09.09.2004
(51) Int. Cl.: E05B 47/00, E05B 65/36

(54) **DISPOSITIF DE COMMANDE MULTIPLE DE MOTEURS ELECTRIQUES**
MEHRFACHSTEUERVORRICHTUNG FÜR ELEKTRISCHE MOTOREN
MULTIPLE CONTROL DEVICE FOR ELECTRIC MOTORS

(30) Priorité: 11.09.2003 FR 0310703
(43) Date de publication de la demande: 12.07.2006
(73) Titulaire: Johnson Controls Technology Company, Holland, MI 49423 (US)
(72) Inventeur: DELAPORTE, Francis, 95520 Osny (FR)
(74) Mandataire: Bloch, Gérard
(86) Numéro de dépôt international: PCT/FR2004/002284
(87) Numéro de publication internationale: WO 2005/026478

(56) Documents cités:
- EP-A- 0 924 372
- DE-A- 4 135 094
- US-A- 4 537 049
- US-A- 5 965 953

## Description

L'invention concerne le domaine de la commande multiple de moteurs électriques équipant les véhicules automobiles, notamment ceux utilisés dans la fonction connue sous l'appellation "doorlock " servant à commander l'ouverture ou la fermeture centralisée des portes. Mais bien d'autres moteurs peuvent être encore considérés, comme ceux des sièges, des miroirs, des volets du système de climatisation, de la trappe à carburant, du toit ouvrant, des vitres, etc.

Par dispositif de commande multiple de moteurs, on entend un dispositif agencé pour combiner les commandes de plusieurs moteurs électriques selon des combinaisons différentes, correspondant à des états différents de la fonction concernée, par exemple ouverture / fermeture partielle ou totale correspondant aux états " lock ", " superlock " et " superlock arrière " (protection des enfants) de la fonction de fermeture des portes évoquée ci-dessus.

Ces moteurs sont pilotés par des relais, eux-mêmes commandés par un microprocesseur qui assure la coordination centrale des commandes effectuées par l'utilisateur.

Une récente évolution de la technologie, dans le cadre notamment de la technique de l'accès dit " main libre "(passive entry), permet maintenant l'emploi de moteurs à réponse notablement plus rapide, typiquement quelques millisecondes, voire quelques dizaines de millisecondes, alors qu'auparavant, il s'agissait de réponses de plus de 100 millisecondes, voire de quelques centaines de ms.

Pour considérer la fonction "passive entry ", qui permet l'ouverture de la portière lors de l'actionnement de sa poignée grâce à un badge porté par l'utilisateur, la moindre attente n'est en effet plus tolérable.

Ces moteurs présentant des caractéristiques de rapidité de réponse proches de celles des relais qui les commandent, un inconvénient de leur utilisation en commande multiple est la nécessité de synchroniser leurs commandes de façon plus précise, sous peine de s'exposer à des combinaisons transitoires pouvant induire un état fonctionnel non souhaité par l'utilisateur. En d'autres termes, et de façon pratique, le risque existe qu'une portière de voiture soit ouverte sans qu'on ne le sache.

Ces combinaisons transitoires parasites sont d'autant plus probables que les boîtiers de relais, de capteurs et de moteurs équipant la fonction considérée peuvent provenir de fabricants différents, avec des caractéristiques disparates.

On a déjà proposé des solutions à ce problème, par exemple celles décrites dans le document EP 0 924 372. Elles consistent à introduire des retards sur chacune des commandes appliquées aux moteurs, ce qui revient à s'aliéner volontairement un progrès important au regard de l'utilisateur du véhicule.

La demanderesse a cherché à exploiter au mieux les caractéristiques de rapidité des nouveaux moteurs, sans s'imposer de contraintes dans le choix des fabricants de boîtiers électroniques et de capteurs, ce qui serait industriellement coûteux.

A cet effet, l'invention concerne un dispositif de commande multiple de moteurs électriques d'actionnement d'accessoires d'un véhicule automobile, pour combiner les commandes de plusieurs moteurs électriques, chaque combinaison correspondant à un état fonctionnel prédéterminé, et comportant des moyens d'alimentation électrique, des relais de commande desdits moteurs, mis en coupure de leur alimentation pour les commander, et des moyens de commande desdits relais, caractérisé par le fait qu'il comporte des moyens interrupteurs en coupure de l'alimentation desdits moteurs et les moyens de commande sont agencés pour ouvrir ou fermer lesdits moyens interrupteurs seulement quand un état prédéterminé est atteint.

Ce sont les moyens interrupteurs qui synchronisent l'alimentation des moteurs concernés. On notera qu'une activation des moyens interrupteurs après stabilisation des relais évite les surtensions et augmente la durée de vie des relais.

Avantageusement, les moyens interrupteurs sont montés en coupure sur retour d'alimentation des moteurs.

De préférence, les moyens de commande commandent les relais de commande selon une prévision d'utilisation, avant que la commande ne soit appliquée par l'utilisateur, par exemple en préparation à la décondamnation des portes.

Seuls les moyens interrupteurs sont commandés lorsque l'utilisateur exerce sa commande, si cette commande est conforme à la prévision d'utilisation. Les relais de commande étant déjà positionnés, on gagne ainsi le temps de leur manoeuvre.

De préférence encore, les moyens interrupteurs comportent au moins un interrupteur électronique en coupure du retour d'alimentation des moteurs à un potentiel de référence, par exemple à la masse électrique.

De préférence toujours, l'interrupteur électronique est du type transistor à effet de champ (FET) du type JFET ou MOSFET, par exemple.

Avantageusement, l'interrupteur électronique est un transistor à intelligence, dit "smart power ", agencé pour délivrer une information de fonctionnement anormal aux moyens de commande. En coupure du retour d'alimentation, il est appelé "smart de pied".

Selon une autre caractéristique de l'invention, les moyens de commande sont agencés pour échantillonner et numériser le courant électrique circulant dans la résistance interne du transistor à effet de champ servant d'interrupteur électronique à une fréquence suffisante pour analyser la forme du courant électrique circulant dans les bobines des moteurs.

Les moyens de commande peuvent ainsi contrôler le bon fonctionnement dynamique des moteurs.

L'invention sera mieux comprise à l'aide de la description suivante de la forme de réalisation préférée du dispositif de commande multiple de moteurs électriques selon l'invention, en référence au dessin annexé, sur lequel :

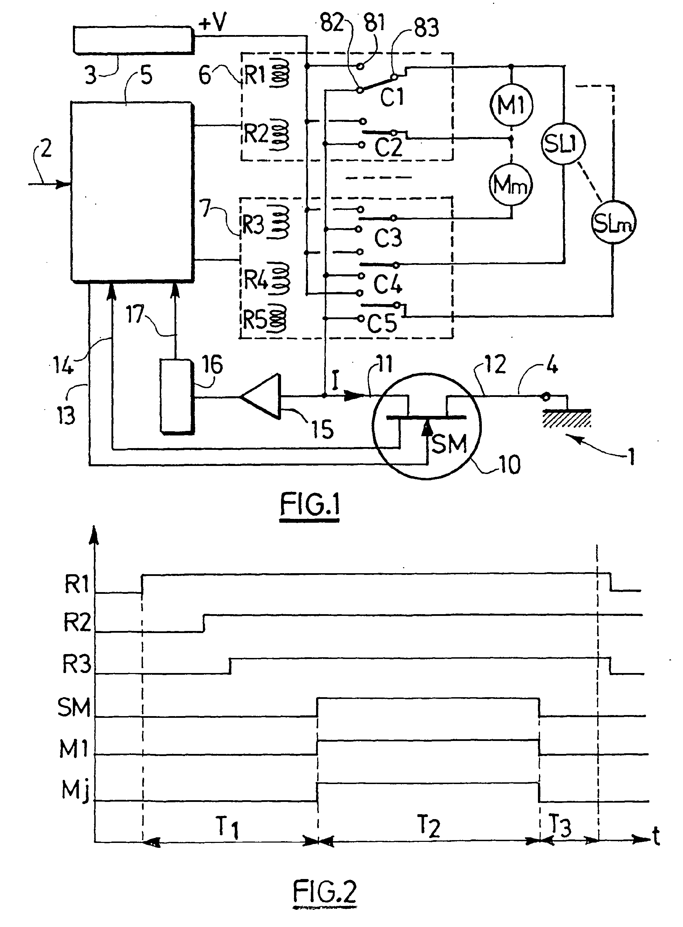

- la figure 1 est un schéma électrique fonctionnel du dispositif de commande multiple selon l'invention et
- 1a figure 2 est un chronogramme d'un exemple de commandes combinées effectuées par les moyens de commande du dispositif de commande multiple selon l'invention.

En référence à la figure 1, le dispositif 1 de commande multiple de moteurs électriques d'une fonction comporte, outre les moteurs M1 à Mn et SL1 à SLm à commander en combinaison, un microprocesseur 5 de commande commandant, à partir de consignes 2 d'un utilisateur, l'ouverture ou la fermeture des contacts C1, C2, C3, C4, Ci, ..., respectivement de relais R1, R2, R3, R4, Ri, ....

Dans l'exemple de la figure 1, R1, C1 et R2, C2 sont dans un même boîtier de relais 6, et R3, C3, R4, C4, R5, C5 dans un autre boîtier de relais 7. Deux boîtiers seulement ont été représentés, mais il peut naturellement y en avoir plus.

Un moteur est commandé par deux contacts, par exemple le moteur M1 est commandé par les deux contacts du boîtier 6. Mais un même moteur Mj (j compris entre 1 et n) ou un moteur SLk (k compris entre 1 et m) peut être commandé par deux relais Ri et Ri+1 de boîtiers de constructeurs différents, comme les moteurs Mn ou SL1, reliés, sur la figure, aux deux boîtiers 6 et 7.

Tous les contacts Ci sont à deux positions 81 et 82 dont les bornes peuvent être connectées alternativement à une borne 83 d'un moteur Mj ou SLk. La borne 83 est connectée en position 81 à une alimentation 3 commune aux moteurs de la fonction, et en position 82 au retour de l'alimentation des mêmes moteurs. Ici, ce retour est le potentiel de référence, en l'espèce la masse électrique 4 du dispositif 1.

La structure ainsi définie permet de connecter les deux bornes d'un moteur soit pour l'alimenter en un courant I positif ou négatif, soit pour ne pas l'alimenter et alors les deux bornes sont connectées à une même polarité, l'alimentation 3 ou la masse 4.

Le microprocesseur 5 est agencé pour commander en combinaison les relais Ri, donc les moteurs Mj ou SLk, compte-tenu de la fonction à assurer, tout en tenant compte de cette structure de façon à éviter toute incohérence, notamment celles conduisant à des courts-circuits ou à des états non désirés de la fonction, et correspondant à des combinaisons de commande temporaires résultant du fait, notamment, que les boîtiers sont de constructeurs différents et que les moteurs sont plus rapides.

Par exemple, pour fermer la portière " conducteur " d'un véhicule, seul le moteur M1 sera commandé, à l'exclusion des autres moteurs Mn ou SL. Pour condamner les portes arrières, deux moteurs M3 et M4 pourraient être commandés, ou seul le moteur SL2 " superlock arrière " pourrait l'être, mais on pourra également, dans cet état de la fonction, commander aussi la fermeture de la porte passager avant par le moteur M2. Une fermeture générale commandera quatre moteurs M1 à M4, ou les deux moteurs SL1 et SL2, etc.

Ici, toutes les bornes 82 des contacts Ci sont reliées à la borne 11 d'un transistor JFET ou MOSFET " smart power " 10, aussi désigné par les lettres SM, par ailleurs relié à la masse électrique 4 du dispositif 1. Le transistor SM est commandé par une sortie 13 du microprocesseur 5 et il lui transmet une information "température de fonctionnement correct", information ordinairement délivrée par les transistors " smart power ", par une liaison 14. Ces transistors travaillent dans deux états : un état bloqué et un état passant. L'état bloqué permet de mettre en mode repos l'alimentation du moteur.

Le courant I passant dans le transistor SM est lu sur sa borne 11 et amplifié par un amplificateur opérationnel 15 dont la sortie est reliée à un convertisseur analogique numérique 16 fournissant en temps réel la valeur numérique du courant I au microprocesseur 5 par une liaison 17.

Le microprocesseur 5 peut ainsi commander un moteur Mj ou SLk de son choix et collecter la valeur du courant I qui en résulte pour la comparer à un gabarit Gj de bon fonctionnement du moteur choisi selon des méthodes de traitement du signal connues de l'homme du métier.

Le fonctionnement du dispositif va maintenant être expliqué.

En référence à la figure 2, quand l'utilisateur sollicite la fonction assurée par le dispositif 1 selon une consigne particulière visant à mettre la fonction dans un état particulier Ep, la consigne est transmise au microprocesseur 5 par la liaison 2. Pour mettre la fonction dans l'état Ep, le microprocesseur détermine, en fonction de l'état Ep désiré et l'état précédent Ep-1, la combinaison des moteurs Mj et/ou SLk à alimenter en courant électrique I et en déduit les relais Ri à commander, comme ordinairement.

Par exemple, sur la figure 2, les moteurs à alimenter étant les moteurs M1 et Mn, les relais à commander sont les relais R1, R2, et R3. Le microprocesseur 5 les commande et les contacts Ci basculent sur les positions 81 ou 82 selon la combinaison requise.

Comme le transistor SM n'est pas commandé, il est dans un état bloqué, aucun courant I ne circule dans les moteurs et aucun état intempestif ne peut intervenir pendant le basculement des contacts Ci des relais Ri.

Après un temps suffisant T1 permettant le basculement de tous les relais concernés R1, R2, R3, le microprocesseur 5 commande le transistor SM par la liaison 13, ce qui le rend passant et provoque l'alimentation électrique. Les moteurs M1 et M2 sont alors reliés à l'alimentation 3 d'un côté et à la masse électrique 4 de l'autre, ce qui y provoque le passage du courant I.

Au bout d'un second temps T2 suffisant pour la mise en fin de course des moteurs M1, M2, l'état Ep désiré est atteint et le microprocesseur interrompt la commande du transistor SM.

Selon l'état Ep atteint, il est possible qu'un état suivant Ep+1, souhaité par l'utilisateur, soit naturellement connu ou prévisible, ou même seulement le plus probable. Le microprocesseur peut anticiper cet état Ep+1 en pré-positionnant les relais Ri après un temps T3 suffisant permettant un retour du transistor SM à l'état bloqué. Cette éventuelle anticipation permet de gagner le temps T1 lors de la consigne suivante de l'utilisateur. C'est notamment le cas de la fonction "passive entry " pour l'ouverture générale des portières. A la fermeture des portières, en quittant sa voiture, on place les éléments présentés ci-dessus en position d'ouverture.

Si un moteur est défaillant, par court-circuit ou toute autre raison augmentant anormalement le courant électrique I passant dans le moteur, le courant passant dans le transistor SM augmente anormalement et le transistor "smart power "détecte une augmentation anormale de température. Il le signale au microprocesseur 5 par la liaison 14, lequel peut émettre un message ou une signalisation d'alerte ou de pré-alerte à l'utilisateur.

Dans ce cas, lors d'une opération de dépannage, le dépanneur peut isoler le moteur Mj défaillant, en sollicitant le microprocesseur 5 pour commander consécutivement tous les moteurs de la fonction en défaut, relever la forme du signal sur la borne 11 du transistor SM, signal amplifié par l'amplificateur 15, numérisé par le convertisseur 16 et transmis par la liaison 17, et comparer chaque signal de chaque moteur au gabarit Gj de bon fonctionnement du moteur testé.

Au cours de cette opération, la résistance interne (appelée RDS, résistance "drain-source ") du transistor SM sert de résistance de mesure du courant I.

## Revendications

1. - Dispositif de commande multiple (1) de moteurs électriques d'actionnement d'accessoires d'un véhicule automobile pour combiner les commandes de plusieurs moteurs électriques (Mj, SLk), chaque combinaison correspondant à un état fonctionnel prédéterminé, et comportant des moyens d'alimentation électrique (3), des relais (Ri) de commande desdits moteurs, mis en coupure de leur alimentation pour les commander, et des moyens (5) de commande desdits relais (Ri), dispositif **caractérisé par le fait qu'**il comporte des moyens interrupteurs (SM) en coupure de l'alimentation (4) desdits moteurs et les moyens (5) de commande sont agencés pour ouvrir ou fermer lesdits moyens interrupteurs (SM) seulement quand un état prédéterminé est atteint.

2. - Dispositif selon la revendication 1, dans lequel lesdits moyens interrupteurs (SM) sont montés en coupure du retour d'alimentation des moteurs.

3. - Dispositif selon l'une des revendications 1 et 2, dans lequel les moyens (5) de commande commandent les relais (Ri) de commande selon une prévision d'utilisation avant que la commande ne soit exercée par l'utilisateur.

4. - Dispositif selon l'une des revendications 1 à 3, dans lequel les moyens interrupteurs (SM) comportent au moins un interrupteur électronique en coupure du retour (4), d'alimentation des moteurs, à la masse électrique.

5. - Dispositif selon la revendication 4, dans lequel l'interrupteur électronique (SM) est un transistor de type MOS agencé pour délivrer une information de température de fonctionnement.

6. - Dispositif selon l'une des revendications 4 et 5, dans lequel l'interrupteur électronique est un transistor à intelligence de type " smart power " agencé pour délivrer (14) une information de fonctionnement anormal aux moyens de commande (5).

7. - Dispositif selon l'une des revendications 1 à 5, dans lequel il est prévu des moyens (5, 15, 16) pour contrôler le fonctionnement dynamique des moteurs.

8. - Dispositif selon la revendication 7, dans lequel les moyens (5, 15, 16) pour contrôler le fonctionnement dynamique des moteurs comportent des moyens (16) de conversion pour numériser le courant électrique I circulant dans la résistance interne du transistor interrupteur électronique (SM).

9. - Dispositif selon la revendication 8, dans lequel les moyens de conversion (16) sont agencés pour fournir en temps réel aux moyens de commande (5) la valeur des courants électriques I circulant dans les moteurs (Mj, SLk) pendant leur commande.

10. - Dispositif selon l'une des revendications 7 à 9, dans lequel les moyens de commande (5) sont agencés pour comparer la forme des courants électriques I circulant dans les moteurs (Mj, SLk) à un gabarit de bon fonctionnement.

## Claims

1. Multiple control device (1) for electric motors for actuating elements of a motor vehicle for combining the control units of a plurality of electric motors (Mj, SLk), each combination corresponding to a predetermined functional state, and comprising electric supply means (3), relays (Ri) for controlling said motors, their power supply being interrupted for their control, and means (5) for controlling said relays (Ri), device **characterized in that** it comprises breaker means (SM) for interrupting power supply (4) for said motors and the controls means (5) are arranged for switching on and off said breaker means (SM) only when a predetermined situation is attained.

2. Device according to Claim 1, wherein said breaker means (SM) are assembled on return path of power supply to the motors.

3. Device according to any one of Claims 1 and 2, wherein the control means (5) control the control relays (Ri) according to a prediction of use, before control is exercised by the user.

4. Device according to any one of Claims 1 to 3, wherein the breaker means (SM) comprise at least one eletronic switch on return path of power supply (4) to the motors, at the electronical mass.

5. Device according to Claim 4, wherein the electronic breaker (SM) is a transistor of the MOS type, designed for transmitting an information about operating temperature.

6. Device according to any one of Claims 4 and 5, wherein the electronic breaker is a smart transistor of the "smart power" type, designed for transmitting (14) an information about abnormal operation to the control means (5).

7. Device according to any one of Claims 1 to 5, wherein means (5, 15, 16) are provided for controlling the dynamic operation of the motors.

8. Device according to Claim 7, wherein the means (5, 15, 16) for controlling the dynamic operation of the motors comprise conversion means (16) for digitizing the electrical current I flowing in the internal resistance of the electronic breaker transistor (SM).

9. Device according to Claim 8, wherein the conversion means (16) are designed for transmitting to the control means (5), in real time, the value of the electrical currents I flowing through the motors (Mj, SLk) during their control.

10. Device according to any one of Claims 7 to 9, wherein the control means (5) are designed for comparing the shape of the electrical currents I flowing through the motors (Mj, SLk) with a template of correct operation.

## Patentansprüche

1. Mehrfachsteuervorrichtung (1) für elektrische Motoren zum Betätigen von Zubehörteilen eines Kraftfahrzeugs, um die Steuerungen mehrerer elektrischer Motoren (Mj, SLk) zu kombinieren, wobei jede Kombination einem vorbestimmten Betriebszustand entspricht und die Mittel (3) zum elektrischen Versorgen, Relais (Ri) zum Steuern der Motoren, Abschalten deren Stromversorgung, um sie zu steuern, sowie Mittel (5) zum Steuern der Relais (Ri) aufweist, **dadurch gekennzeichnet, dass** sie Ein-/Ausschaltmittel (SM) zum Abschalten der Stromversorgung (4) aufweist, und dass die Steuermittel (5) eingerichtet sind, um die Ein-/Ausschaltmittel (SM) nur zu öffnen oder zu schließen, wenn ein vorbestimmter Zustand erreicht wird.

2. Vorrichtung nach Anspruch 1, bei der die Ein-/Ausschaltmittel (SM) zum Abschalten der Versorgungsrückkehr der Motoren installiert sind.

3. Vorrichtung nach einem der Ansprüche 1 und 2, bei der die Steuermittel (5) die Steuerrelais (Ri) gemäß einer Gebrauchsvorhersage steuern, bevor die Steuerung vom Benutzer ausgeübt wird.

4. Vorrichtung nach einem der Ansprüche 1 bis 3, bei der die Ein-/Ausschaltmittel (SM) mindestens einen elektronischen Ein-/Ausschalter zum Abschalten der Rückkehr (4) der Stromversorgung der Motoren an der elektrischen Masse aufweisen.

5. Vorrichtung nach Anspruch 4, bei der der elektronische Ein-/Ausschalter (SM) ein Transistor des Typs MOS ist, der eingerichtet ist, um eine Betriebstemperaturinformation zu liefern.

6. Vorrichtung nach einem der Ansprüche 4 und 5, bei der der elektronische Ein-/Ausschalter ein Transistor mit Intelligenz des Typs "Smart Power" ist, der eingerichtet ist, um eine Information des anormalen Betriebs an die Steuermittel (5) zu liefern (14).

7. Vorrichtung nach einem der Ansprüche 1 bis 5, bei der Mittel (5, 15, 16) zum Steuern des dynamischen Betriebs der Motoren vorgesehen sind.

8. Vorrichtung nach Anspruch 7, bei der die Mittel (5, 15, 16) zum Steuern des dynamischen Betriebs der Motoren Mittel (16) zum Umwandeln aufweisen, um den elektrischen Strom I, der in dem internen Widerstand des elektronischen Ein-/Ausschalt-Transistors (SM) zirkuliert, zu digitalisieren.

9. Vorrichtung nach Anspruch 8, bei der die Umwandlungsmittel (16) eingerichtet sind, um den Steuermitteln (5) in Echtzeit den Wert der elektrischen Ströme I zu liefern, die in den Motoren (Mj, SLk) während ihrer Steuerung zirkulieren.

10. Vorrichtung nach einem der Ansprüche 7 bis 9, bei der die Steuermittel (5) eingerichtet sind, um die Form der elektrischen Ströme I, die in den Motoren (Mj, SLk) zirkulieren, mit einer Vorlage für guten Betrieb vergleichen.
